# EUROPÄISCHE PATENTANMELDUNG

(11) **EP 2 522 261 A1**
(43) Veröffentlichungstag der Anmeldung: **14.11.2012**
(21) Anmeldenummer: 12167477.4
(22) Anmeldetag: 10.05.2012
(51) Int. Cl.: A47J 43/046, A47J 27/08, A47J 27/086

(54) **Verfahren zum Zubereiten von Speisen in einem Gargefäß sowie elektrische Küchenmaschine mit einem Gargefäß**

(30) Priorität: 11.05.2011 DE 102011050269; 03.05.2012 DE 102012103882
(71) Anmelder: Vorwerk & Co. Interholding GmbH, 42275 Wuppertal (DE)
(72) Erfinder: Starflinger, Frank, 44793 Bochum (DE)
(74) Vertreter: Müller, Enno

(57) **Zusammenfassung**

Die Erfindung betrifft zunächst ein Verfahren zum Zubereiten von Speisen in einem Gargefäß (6) mit einem Aufnahmevolumen von 0,5 bis 5 Liter, wobei das Gargefäß (6) einen Verschlussdeckel (10) aufweist und der Verschlussdeckel (10) zur Erzeugung eines Überdrucks im Zuge der Zubereitung im Inneren des Gargefäßes (6) druckdicht verschließbar ist. Um ein Verfahren der in Rede stehenden Art in vorteilhafter Weise weiter zu verbessern, wird vorgeschlagen, dass das Gargefäß (6) Teil einer Küchenmaschine (1) ist und mittels einer in ihrer Leistung regelbaren Aufheizvorrichtung (8) aufgeheizt wird und dass eine Aufheizung in Abhängigkeit eines gewünschten Druckes in dem Gargefäß (6) vorgenommen wird. Außerdem betrifft die Erfindung eine elektrische Küchenmaschine (1) mit einem Gargefäß (6) und einem Verschlussdeckel (10) für das Gargefäß (6), weiter mit einer Aufheizvorrichtung (8) für das Gargefäß (6). Um eine Küchenmaschine der in Rede stehenden Art insbesondere hinsichtlich einer erweiterten Nutzung weiter zu verbessern, wird vorgeschlagen, dass der Verschlussdeckel (10) druckdicht mit dem Gargefäß (6) verschließbar ist, womit ein Garvorgang unter Überdruck durchführbar ist, und dass mittels Erfassung einer dem Inneren des Gargefäßes (6) zugeordneten Temperatur und/oder dem Inneren des Gargefäßes (6) zugeordneten Druckes ein Garvorgang durchführbar ist, der einen gesteuerten Druckabbau ermöglicht.

## Beschreibung

Die Erfindung betrifft zunächst ein Verfahren zum Zubereiten von Speisen in einem Gargefäß mit einem Aufnahmevolumen von 0,5 bis 5 Liter, wobei das Gargefäß einen Verschlussdeckel aufweist und der Verschlussdeckel zur Erzeugung eines Überdrucks im Zuge der Zubereitung im Inneren des Gargefäßes druckdicht verschließbar ist.

Verfahren der in Rede stehenden Art sind bekannt, so insbesondere im Zusammenhang mit sogenannten Dampfkoch- oder Schnellkochtöpfen, bei welchen das Gargut zufolge des durch den Deckel verschlossenen Gargefäßes im Zuge des Garprozesses vorherrschenden Überdrucks von ca. 1 bar bei höheren Temperaturen von bis zu 120 bis 140°C als der Normalsiedetemperatur gegart werden können. Hierdurch verkürzt sich die Kochzeit bis hin zu einem Wert, der dem 0,6- bis 0,9-Fachen der beim üblichen Garen unter Atmosphärendruck benötigten Garzeit. Darüber hinaus hat sich ergeben, dass zufolge des unter Überdruck erreichbaren Dampfgarens wertvolle Vitamine und Mineralstoffe des Gargutes besonders gut erhalten bleiben. Um das Gargefäß druckdicht zu verschließen, ist es weiter bekannt, den Verschlussdeckel zu verriegeln, insbesondere an dem Gargefäß derart festzulegen, dass auch zufolge Druckbeaufschlagung vom Gargefäßinneren her der Verschlussdeckel sicher aufsitzt und so den gewünschten Überdruck im Gargefäßinneren hält. Gargefäße mit einem Aufnahmevolumen von bevorzugt 0,5 bis 5 Liter finden insbesondere Anwendung im Haushalts-Küchenbereich.

Im Hinblick auf den vorbeschriebenen Stand der Technik wird eine technische Problematik der Erfindung darin gesehen, ein Verfahren der in Rede stehenden Art in vorteilhafter Weise weiter zu verbessern, dies weiter insbesondere im Hinblick auf eine Anwendungserleichterung für den Benutzer.

Diese Problematik ist zunächst und im Wesentlichen durch den Gegenstand des Anspruchs 1 gelöst, wobei darauf abgestellt ist, dass das Gargefäß Teil einer Küchenmaschine ist und mittels einer in ihrer Leistung regelbaren Aufheizvorrichtung aufgeheizt wird und dass eine Aufheizung in Abhängigkeit eines gewünschten Druckes in dem Gargefäß vorgenommen wird. Bevorzugt ist diesbezüglich weiter, dass das Gargefäß Teil einer Haushalts-Küchenmaschine ist, weiter bspw. einer unter dem Handelsnamen "Vorwerk-Thermomix" bekannten Küchenmaschine. Diesbezüglich wird bspw. auf die DE 102 10 442 A1 und auf die DE 10 2005 028758 A1 verwiesen. Der Inhalt dieser Patentanmeldungen wird hiermit vollinhaltlich in die Offenbarung vorliegender Erfindung mit einbezogen, auch zu dem Zweck, Merkmale dieser Patentanmeldungen in Ansprüche vorliegender Erfindung mit einzubeziehen. Die Küchenmaschine weist eine Aufheizvorrichtung auf. Diese ist bevorzugt in einer Ausgestaltung eine elektrische Widerstandsheizung, welche weiter bevorzugt im Bereich des Gargefäßbodens ausgebildet ist. Eine elektrische Kontaktierung der gefäßseitigen Widerstandsheizung erfolgt über entsprechend positionierte Elektrokontakte in einer das Gargefäß aufnehmenden Gargefäßaufnahme der Küchenmaschine. Weiter sind diesbezüglich Lösungen bekannt, bei welchen eine Aufheizung über eine insbesondere die Gargefäßwandung, zugeordnet dem Gargefäßboden umgebende Heizung vorgenommen wird, weiter insbesondere zur mittelbaren Wärmebeaufschlagung des Gargutes über die Gargefäßwandung. Diesbezüglich ist weiter bekannt, die Küchenmaschine so auszugestalten, dass eine bevorzugt selbsttätige Regelung der Aufheizvorrichtung vorgenommen wird. Die gewünschte Temperatur ist bevorzugt über ein Stellelement, wie bspw. einem Drehschalter oder über Tasten durch den Benutzer voreinstellbar, alternativ hier weiter bevorzugt einstellbar über eine Rezeptsteuerung der Küchenmaschine. Dies wird in vorteilhafter Weise genutzt zum Zubereiten von Speisen unter Überdruck, dies weiter unter Nutzung eines druckdicht verschließbaren Gargefäßes. Dieses ist entsprechend der Küchenmaschine zuordbar, weiter bevorzugt insbesondere in die küchenmaschinenseitige Aufnahme einsetzbar. Über die Küchenmaschine und eine entsprechende Sensorik in der Küchenmaschine bzw. in dem Gargefäß ist insbesondere zufolge einer küchenmaschinenseitig vorgesehenen Steuerung und Regelung eine Anpassung der Aufheizung in Abhängigkeit eines gewünschten Druckes in dem Gargefäß vornehmbar, so dass weiter bevorzugt im Zuge eines Garprozesses der gewünschte, bevorzugt voreingestellte Druck im Gargefäß zumindest über einen Zeitraum zumindest annähernd gleichbleibend gehalten werden kann. Die Küchenmaschine weist hierzu bevorzugt einen auswählbaren Dampfgarmodus, zur selbsttätigen Regelung der Heizleistung und/oder der Garzeit auf. Bei den bekannten Druck-Gargefäßen, welche beheizt werden über eine Heizplatte eines Herdes, erfolgt die Regelung der Aufheizung manuell durch den Benutzer. Dieser muss entsprechend den im Gargefäß vorherrschenden Druck kontrollieren und davon abhängig eine Nachregelung der Aufheizung herbeiführen. Dies erweist sich als für den Benutzer umständlich. Weiter führt dies in der Regel zu einer über den gesamten Garzeitraum betrachteten erhöhten Energiezufuhr. Bei Überhöhung des gewünschten oder vorgegebenen Druckes erfolgt eine Abdampfung über ein Sicherheitsventil, womit auch wertvolle Vitamine und Mineralien ausgeblasen werden. Diesem Missstand ist durch das vorgeschlagene Verfahren entgegengewirkt. Durch die bevorzugt selbsttätige Anpassung der Aufheizung zufolge entsprechender Ansteuerung der Aufheizvorrichtung wird bevorzugt über den gesamten Garprozess kein Benutzereingriff benötigt. Auch ist hierdurch bevorzugt eine Regelung erreicht, die einer Drucküberhöhung frühzeitig entgegenwirkt oder zumindest zeitlich begrenzt, so dass einem Ausstoß von Dampf zufolge überhöhten Drucks entgegengewirkt ist.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

Zur Regelung der Aufheizvorrichtung in Abhängigkeit von einem gewünschten bzw. vorgegebenen Druck im Gargefäßinneren wird dieser Druck entsprechend bevorzugt überwacht. Hierzu ist in einer beispielhaften Ausgestaltung dem Gefäßinnern zugeordnet ein Drucksensor oder dergleichen vorgesehen, dessen Messwerte bevorzugt über eine elektrische Kontaktierung zwischen Gargefäß und der Gefäßaufnahme der Küchenmaschine an eine maschinenseitige Auswerte- und Regelelektronik übermittelt werden. In Abhängigkeit von den erfassten Druckdaten erfolgt bevorzugt zufolge der Steuer- und Regelungselektronik der Küchenmaschine eine entsprechende Anpassung, bevorzugt eine entsprechende Anpassung der Heizleistung der Aufheizvorrichtung, wobei eine solche Anpassung durch eine Regelung der Aufheizvorrichtung innerhalb eines Leistungsbandes von maximaler Heizleistung bis hin zum Abschalten der Aufheizvorrichtung liegt. Bevorzugt wird diesbezüglich weiter, dass der Druck durch eine dem Gefäßinnern zugeordnete Temperatur überwacht wird. So erfolgt entsprechend bevorzugt eine mittelbare Erfassung des Druckes über die im Gefäßinneren herrschende Temperatur. Diesbezüglich kommen bevorzugt Temperaturfühler zum Einsatz, weiter bevorzugt Temperaturfühler mit PTC- oder NTC-Verhalten. So ist weiter bevorzugt alternativ oder kombinativ zu einem Medien-Temperaturfühler, der unmittelbar die Temperatur an dem in dem Gargefäß befindlichen Medium oder Gargut misst, ein Heizflächen-Temperaturfühler vorgesehen, der der Überwachung der zugeführten Heizenergie bzw. der Oberflächentemperatur der Heizung dient. Diesbezüglich wird auf die DE 10 2008 038783 A1 verwiesen. Auch der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen. Über die erfasste Temperatur im Gefäßinneren wird bevorzugt über eine entsprechende Auswerteelektronik in der Küchenmaschine auf den im Gefäßinneren herrschenden Druck zurückgeschlossen, dies weiter bevorzugt zur entsprechenden Regelung der Aufheizvorrichtung.

Weiter bevorzugt weist das Gargefäß ein Rührwerk auf. Dieses ist bevorzugt in dem Gargefäß bodenseitig angeordnet, weiter bevorzugt um eine in Betriebsstellung vertikale Achse frei und relativ zu dem Gargefäß drehbar. Der Antrieb eines solchen Rührwerkes in dem Gargefäß erfolgt bevorzugt mittels eines in der Küchenmaschine vorgesehenen Elektromotors, wozu weiter bevorzugt zwischen dem Gargefäß bzw. dem gargefäßseitigen Rührwerk und der das Gargefäß aufnehmenden Aufnahme der Maschine eine drehfeste Kupplung vorgesehen ist. Das Rührwerk wird bevorzugt im Zuge des Garvorganges, entsprechend auch im Zuge des Überdruck-Garvorganges aktiviert, um so das Gargut oder eine für den Garprozess benötigte Flüssigkeit zu rühren. Dies erfolgt in einer Ausgestaltung bevorzugt über den gesamten Garprozess, in weiterer Ausgestaltung bevorzugt intervallartig. Auch kann der gesamte Garprozess ohne Aktivierung des Rührwerks erfolgen. Durch gezieltes Rühren im Überdruckbetrieb ist die Gefahr beispielsweise eines Anbrennens von Gargut wesentlich verringert. Zudem können in vorteilhafter Weise sonst nachgeschaltete Zerkleinerungsprozesse in einer Phase des Druckabbaus in dem Gargefäß vorgenommen werden, was eine Reduzierung von Arbeitsschritten und somit eine Zeitersparnis zur Folge hat. Bevorzugt wird weiter, dass das Rührwerk im Hinblick auf einen schnelleren Temperatur-Abbau eingesetzt wird, dies insbesondere im Zusammenhang mit einem dem Rührwerk zugeordneten Flüssigkeitssumpf. Zum Ende des Garprozesses wird bevorzugt die in dem Gargefäß vorherrschende Temperatur gesenkt, was weiter eine Absenkung des Druckes in dem Gargefäß zur Folge hat. Dies ist weiter bevorzugt Teil einer gesamten Steuerung, bspw. Rezeptsteuerung, die zum Ende des eigentlichen Garprozesses einen Abkühl- bzw. Druckabbauprozess einleitet. Es bedarf entsprechend bevorzugt keinem manuellen Eingriff durch den Benutzer zum Druckabbau im Gefäßinneren, welcher unumgänglich ist, bevor der Verschlussdeckel von dem Gargefäß abgenommen wird. Die Temperaturabsenkung wird zufolge des aktivierten Rührwerkes in vorteilhafter Weise unterstützt. Der Abkühlprozess ist bevorzugt Teil des Gesamt-Garprozesses, wobei weiter bevorzugt das Ende des Gesamt-Garprozesses auf einem Display oder Ähnlichem der Küchenmaschine angezeigt wird. Entsprechend ist weiter bevorzugt nach einer entsprechenden Anzeige der Verschlussdeckel durch den Benutzer entfernbar, weiter bevorzugt erst nach einer entsprechenden Freigabe bspw. Entriegelung des Deckels. Ein, wie aus dem Stand der Technik bekanntes Entlüften durch den Benutzer ist entsprechend zum Druckabbau nicht erforderlich. Speisen bzw. Gargut kann nicht verspritzen, empfindliche Lebensmittel, wie bspw. Kartoffeln, können, wie bspw. durch den beim Entlüften provozierten plötzlichen Druckabbau, nicht platzen.

In weiter bevorzugter Ausgestaltung ist das Gargut in einem Gareinsatz oberhalb des Rührwerks aufgenommen, weiter bevorzugt in einem siebartig mit Durchtrittslöchern versehenen Gareinsatz. Der Boden des Gareinsatzes ist hierbei bevorzugt beabstandet, weiter bevorzugt in Betriebsstellung vertikal beabstandet zum Gargefäßboden. So ergibt sich der vorteilhafte Effekt, dass zumindest auf zwei Etagen, nämlich einmal im Bereich des Gargefäßbodens und einmal im Bereich des Gareinsatzbodens unterschiedliche Gargüter, wobei ein Gargut eine Flüssigkeit sein kann, aufgelegt werden können, die gemeinsam während des bevorzugten Überdruck-Garvorganges gegart werden. In diesem Zusammenhang erweist es sich von Vorteil, dass eine Flüssigkeitsbefüllung des Gargefäßes bevorzugt so weit vorgenommen wird, dass das Gargut zumindest bei nicht betätigtem Rührwerk sich oberhalb des Flüssigkeitsspiegels befindet. Entsprechend tritt das Gargut im Zuge des Garprozesses bevorzugt nicht unmittelbar mit der Flüssigkeit in Kontakt, vielmehr bevorzugt mittelbar zufolge Verdampfens zumindest eines Teils der Flüssigkeit. Mit einem möglichen Einsetzen des Rührwerkes kann insbesondere in Abhängigkeit mit der Füllhöhe der Flüssigkeit eine zumindest partielle unmittelbare Kontaktierung des in dem Gareinsatz befindlichen Garguts erfolgen.

In weiter bevorzugter Ausgestaltung wird eine Deckelverriegelung vorgenommen. Diese wird bevorzugt durch den Benutzer herbeigeführt. Alternativ erfolgt eine solche Deckelverriegelung, wie weiter bevorzugt, selbsttätig, weiter bevorzugt programmgesteuert über die Küchenmaschine. So wird weiter bevorzugt eine solche Deckelverriegelung mit Aktivierung des Rührwerks und/oder der Aufheizvorrichtung vorgenommen, so dass während des Garprozesses ein Entfernen des Verschlussdeckels von dem Gargefäß nicht möglich ist. In diesem Zusammenhang ist es weiter bekannt, die Deckelverriegelung mit einer Abfrage zu kombinieren, welche den ordnungsgemäßen Sitz des Verschlussdeckels auf dem Gargefäß sicherstellt. Bevorzugt ist eine Aktivierung der Aufheizvorrichtung und/oder des Rührwerks ohne ordnungsgemäß aufgesetztem und verriegeltem Verschlussdeckel nicht möglich. Eine derartige Verriegelungsausgestaltung ist bspw. aus der DE 10 2010 037892 A1 bekannt. Auch der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen. Es wird weiter bevorzugt, dass eine Entriegelung der Deckelverriegelung nur in Abhängigkeit von einem vorgegebenen Druck und/oder einer vorgegebenen Temperatur in dem Gargefäß vorgenommen wird, dies weiter entsprechend in Abhängigkeit von den erfassten Messdaten einer Druck- bzw. Temperaturüberwachung des Gefäßinneren. Somit ist sichergestellt, dass die Abnahme des Verschlussdeckels von dem Gargefäß -nach entsprechender Entriegelung- erst nach Unterschreiten eines vorgegebenen Maximaldruckes und/oder einer vorgegebenen Maximaltemperatur durchgeführt werden kann.

Weiter betrifft die Erfindung eine elektrische Küchenmaschine mit einem Gargefäß und einem Verschlussdeckel für das Gargefäß, weiter mit einer Aufheizvorrichtung für das Gargefäß.

Küchenmaschinen der in Rede stehenden Art sind aus der eingangs zitierten Literatur bekannt.

Um eine Küchenmaschine der in Rede stehenden Art insbesondere hinsichtlich einer erweiterten Nutzung weiter zu verbessern, wird gemäß den Merkmalen des Anspruches 7 bevorzugt vorgesehen, dass der Verschlussdeckel druckdicht mit dem Gargefäß verschließbar ist, womit ein Garvorgang unter Überdruck durchführbar ist, und dass mittels Erfassung einer dem Inneren des Gargefäßes zugeordneten Temperatur und/oder dem Inneren des Gargefäßes zugeordneten Druckes ein Garvorgang durchführbar ist, der einen gesteuerten Druckabbau ermöglicht. Zufolge dieser Ausgestaltung ist eine Küchenmaschine von erhöhtem Gebrauchswert geschaffen. Neben dem üblichen und aus dem Stand der Technik bekannten Garen unter Atmosphärendruck ist zufolge des druckdichten Verschlusses des Gargefäßes auch ein Garvorgang unter Überdruck durchführbar, wie dies bspw. bei Nutzung üblicher Dampf- bzw. Schnellkochtöpfe her bekannt ist. Sowohl für einen Garvorgang unter atmosphärischem Druck als auch für einen Garvorgang unter Überdruck wird bevorzugt das gleiche, weiter bevorzugt dasselbe Gargefäß genutzt. Entsprechend ist das Gargefäß ausgelegt für ein Garen unter Überdruck. Alternativ können für die unterschiedlichen Garverfahren unterschiedliche, jeweils der einen Küchenmaschine zuordbare Gargefäße genutzt werden. In beiden Fällen wird bevorzugt die Temperatur im Inneren des Gargefäßes erfasst, so weiter bevorzugt mittelbar über den bevorzugt eine Aufheizvorrichtung darstellenden Gefäßboden und/oder unmittelbar an dem in dem Gargefäß befindlichen Gargut. Alternativ oder auch kombinativ hierzu wird bevorzugt der dem Gargefäßinneren zugeordnete Druck während des Garvorganges erfasst. In Abhängigkeit von der erfassten Temperatur und/oder dem erfassten Druck wird weiter bevorzugt eine Regelung der Aufheizvorrichtung vorgenommen, so weiter bevorzugt im Zusammenhang mit einem unter Überdruck stattfindenden Garvorgang zur Verhinderung eines Übersteigens eines vorgegebenen Maximaldruckes in dem Gargefäß. Die Regelung der Aufheizvorrichtung wird bevorzugt erreicht zufolge entsprechender Leistungsregelung der weiter bevorzugt vorgesehenen elektrischen Widerstandsheizung. Auch werden die Messwerte der Temperatur und/oder des Druckes im Gargefäßinneren genutzt zum gesteuerten Druckabbau im Gefäßinneren, dies weiter bevorzugt zum Ende des gesamten Garprozesses. Eine entsprechende Steuerungselektronik in der Küchenmaschine führt entsprechend bevorzugt zum Ende des Garprozesses eine Regelung der Aufheizvorrichtung durch, die zufolge entsprechenden Temperaturabsenkens einen Druckabbau im Gefäßinneren zur Folge hat. Entsprechend bedarf es zum Ende des gesamten Garprozesses keines manuell durch den Benutzer durchzuführenden Druckabbaues, insbesondere zufolge Entlüften. Mit einer bevorzugten Anzeige des Endes des Gesamt-Garprozesses ist der Druck im Inneren bevorzugt so weit abgebaut, dass dieser zumindest annähernd dem Atmosphärendruck entspricht. Einem Verspritzen von Gargutanteilen mit Abnahme des Verschlussdeckels vom Gargefäß ist hierdurch entgegengewirkt. Weiter ist zufolge des gesteuerten und somit bevorzugt langsamen Druckabbaus im Gefäßinneren einer Schädigung von empfindlichen Gargütern, wie bspw. Kartoffeln, entgegengewirkt. Solche empfindlichen Gargüter können bei einem plötzlichen Druckabbau, bspw. zufolge manuellen Entlüftens, platzen.

Weitere Merkmale der Erfindung sind nachstehend, auch in der Figurenbeschreibung, oftmals in ihrer bevorzugten Zuordnung zum Gegenstand des Anspruches 7 oder zu Merkmalen weiterer Ansprüche erläutert. Sie können aber auch in einer Zuordnung zu nur einzelnen Merkmalen des Anspruches 7 oder des jeweiligen weiteren Anspruches oder jeweils unabhängig von Bedeutung sein.

So ist weiter bevorzugt ein Druckfühler vorgesehen, der den Druck im Inneren des Gargefäßes misst. Diesbezüglich ist ein dem Inneren des Gargefäßes zugeordneter Drucksensor vorgesehen, welcher weiter bevorzugt über entsprechende elektrische Kontaktmittel zwischen dem Gargefäß und der Aufnahme der Küchenmaschine für das Gargefäß die ermittelten Werte an eine maschinenseitige Steuerungs- und Auswerteelektronik leitet. Bevorzugt wird diesbezüglich weiter, dass der Druck mittelbar über die dem Gefäßinneren zugeordnete Temperatur gemessen wird, welche gemessene Temperatur auf den Druck zurückschließen lässt. Hierbei kommen bevorzugt Temperaturfühler zum Einsatz, die nach dem NTC- oder PCT-Verfahren arbeiten. Diesbezüglich wird auch auf die verfahrensmäßig erwähnte Literatur verwiesen, wobei auch diese Patentschrift, wie auch die genannte Literatur, bezüglich der Ausgestaltung der Küchenmaschine, sowie weiter die aufgeführte Patentanmeldung bezüglich der zur Überdrucknutzung des Gargefäßes bevorzugten Deckelverriegelung auch bezüglich der gegenständlichen Ansprüche vollinhaltlich in die Offenbarung vorliegender Erfindung mit einbezogen werden, auch zu dem Zweck, Merkmale dieser Patentanmeldung in Ansprüche vorliegender Erfindung mit einzubeziehen.

Auch wenn, wie bevorzugt, der in dem Gargefäß herrschende Druck, insbesondere Überdruck, erfasst wird und in Abhängigkeit von dem ermittelten Wert eine Regelung der Aufheizvorrichtung vorgenommen wird, erweist es sich insbesondere aus Sicherheitsaspekten von Vorteil, in der Gefäßwandung oder dem Verschlussdeckel ein Überdruckventil vorzusehen, das bevorzugt selbsttätig bei Überschreiten eines vorgegebenen Druckes von bevorzugt größer als 1,2 bar oder 1,5 bar innerhalb des Gargefäßes öffnet. Dieses Überdruckventil ist bevorzugt allein zufolge entsprechender Überdruckbeaufschlagung vom Gefäßinneren her in eine Öffnungsstellung verlagerbar. Denkbar sind diesbezüglich auch Lösungen, bei welchen bevorzugt zusätzlich zu der selbsttätigen Auslösung auch eine manuelle Ventilverlagerung durch den Benutzer herbeigeführt werden kann, so bspw. in dem Falle, dass seitens des Benutzers ein schneller Zugriff auf das in dem Gargefäß befindliche Gargut vorgenommen werden muss. Bevorzugt ist das Überdruckventil im Bereich des Verschlussdeckels angeordnet, entsprechend in dem Bereich des vertikal höchsten Punktes des deckelverschlossenen Gargefäßes.

Auch weist der Verschlussdeckel bevorzugt eine vorzugsweise zentrale Öffnung auf. Diese dient bei einem üblichen Garvorgang unter atmosphärischem Druck bspw. der Zugabe von Zutaten ohne dass hierzu der Verschlussdeckel von dem Gargefäß abgenommen werden muss. Zur Nutzung dieses Verschlussdeckels zusammen mit dem Gargefäß zum Überdruck-Garen ist bevorzugt in die Öffnung des Verschlussdeckels ein Verschlussteil einsetzbar, wobei die Öffnung entsprechend ausgebildet ist, so dass nach Einsetzen des Verschlussteiles ein druckdichter Deckel gegeben ist. Bei dem Verschlussteil handelt es sich bevorzugt um ein stopfenartiges Teil, welches dicht, die Öffnung durchsetzend und/oder die Öffnung übergreifend an dem Deckel festlegbar ist. So ist das Verschlussmittel bspw. an dem Verschlussdeckel zufolge einer Gewindeausbildung festlegbar. Weiter ist diesbezüglich eine Lösung denkbar, bei welcher das Verschlussteil vom Inneren des Verschlussdeckels angesetzt wird und durch die zunehmende Druckerhöhung in dem Gargefäß in einen Dichtsitz gedrängt wird. Zufolge dieser Ausgestaltung ist der Verschlussdeckel sowohl zum Garen unter Atmosphärendruck als auch zum Garen unter Überdruck nutzbar. In weiter bevorzugter Ausgestaltung ist das Verschlussteil ein Überdruckventil bzw. weist das Verschlussteil ein solches Überdruckventil auf.

Das vorgeschlagene Verfahren ist in weiterer Ausgestaltung auch anwendbar bei einer elektrischen Küchenmaschine der in Rede stehenden Art, bei welcher dem Gargefäß ein auf dem Gefäßdeckel aufsitzender oder mit diesem verbundener Garaufsatz zugeordnet ist. Diesbezüglich wird beispielsweise auf die DE 44 14 823 A1 verwiesen. Auch der Inhalt dieser Patentanmeldung wird hiermit vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Bei einer derartigen Anordnung dringt bei einem Garen unter Normaldruck der in dem Gargefäß erzeugte Dampf durch eine Deckelöffnung in den Garaufsatz, zum Garen der hier eingelegten Lebensmittel. Bei einem Überdruckgaren im Gargefäß herrscht in dem Gargefäß ein Überdruck von bevorzugt etwa 1 bar, wobei bevorzugt ein in dem Deckel vorgesehenes Sicherheitsventil den Druckanstieg durch Ablassen von Heißdampf aus dem Inneren des Gargefäßes regelt. Durch Zugabe einer erhöhten Energiemenge kann somit permanent Heißdampf aus dem Gargefäß ausgebracht werden, welcher zum Dampfgaren unter Normaldruck in dem auf dem Deckel aufgesetzten Garaufsatz genutzt werden kann.

Nachstehend ist die Erfindung anhand der beigefügten Zeichnung, welche lediglich Ausführungsbeispiele darstellt, näher erläutert. Es zeigt:
- Fig. 1: in schematischer Seitenansicht eine Küchenmaschine mit einem deckelverschlossenen Gargefäß;
- Fig. 2: die Ansicht gemäß Pfeil II in Fig. 1 in einer Ausschnittdarstellung;
- Fig. 3: das deckelverschlossene Gargefäß mit küchenmaschinenseitigen Mitteln zur Deckelverriegelung in einer perspektivischen Darstellung;
- Fig. 4: den Schnitt gemäß der Linie IV-IV in Fig. 3, wobei das Gargefäß in Zusammenwirkung mit dem Verschlussdeckel ausgelegt ist zum Garen unter atmosphärischem Druck;
- Fig. 5: die Herausvergrößerung des Verriegelungsbereiches V in Fig. 4, die Verriegelungsstellung betreffend;
- Fig. 6: eine der Fig. 5 entsprechende Darstellung, jedoch die Deckelfreigabestellung betreffend;

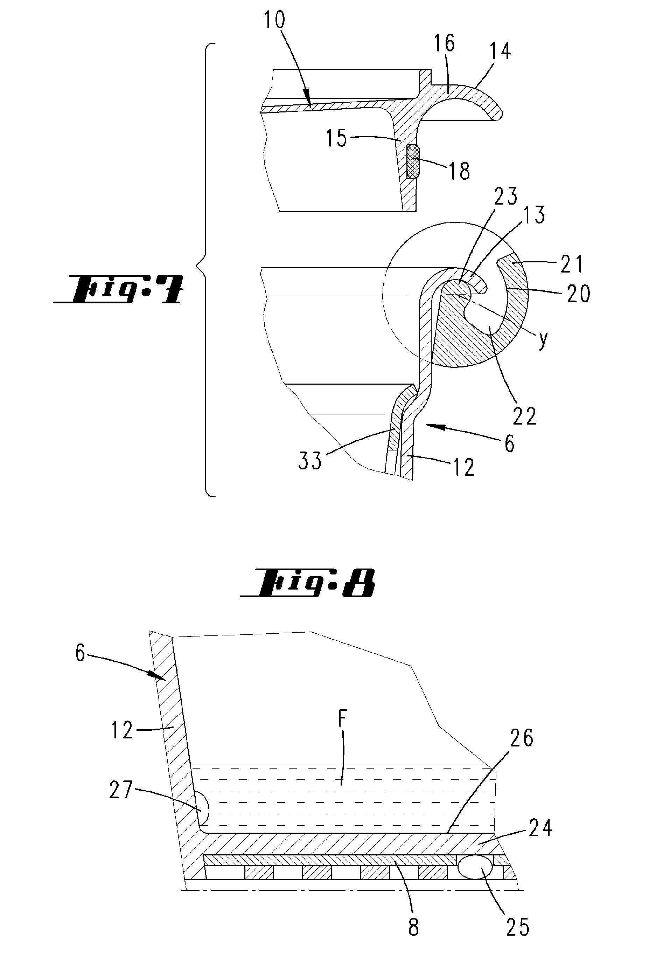

- Fig. 7: eine der Fig. 6 entsprechende Darstellung im Zuge des Abnehmens des Verschlussdeckels vom Gargefäß;
- Fig. 8: in einer Vertikalschnittdarstellung einen Ausschnitt des dem Gargefäßboden zugeordneten Bereiches;
- Fig. 9: den vergrößerten Ausschnitt gemäß IX in Fig. 4, jedoch bei Einsatz eines Verschlussteiles in Form eines Überdruckventils in den Verschlussdeckel zur Nutzung desselben mit dem Gargefäß zum Garen unter Überdruck; und
- Fig. 10: eine der Fig. 9 entsprechende Darstellung, eine alternative Ausgestaltung betreffend.

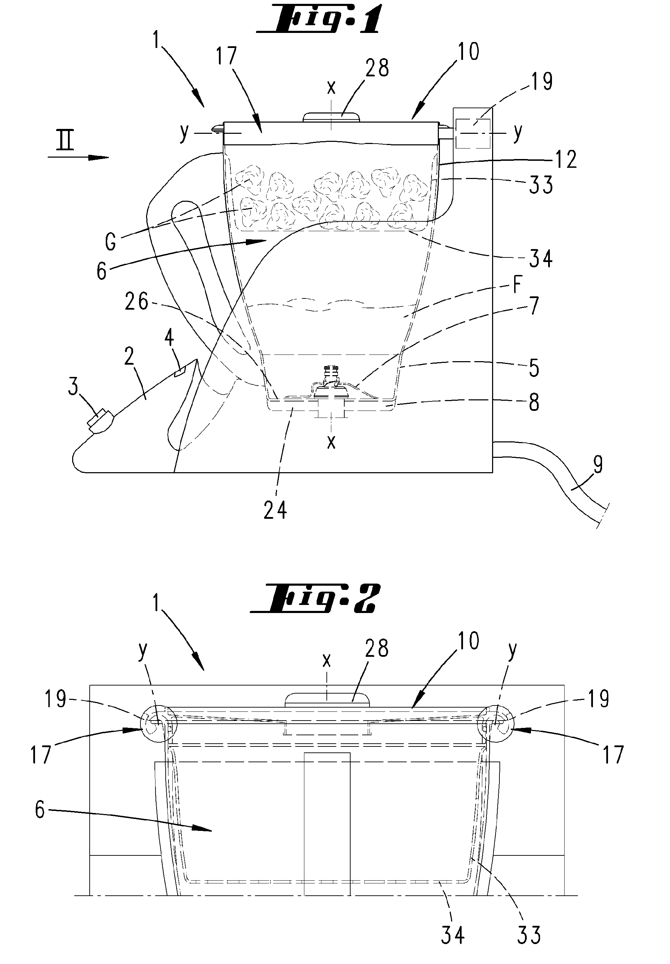

Dargestellt und beschrieben ist zunächst mit Bezug zu Fig. 1 eine elektrisch betriebene Küchenmaschine 1. Diese weist zunächst ein Bedienfeld 2 auf mit bevorzugt einer Mehrzahl von Reglern und/oder Tastern 3 sowie bevorzugt ein Display 4 zum Anzeigen der insbesondere über die Regler und/oder Taster 3 einzustellenden Parametern.

Des Weiteren verfügt die Küchenmaschine 1 über eine Gefäßaufnahme 5. In diese ist ein Gargefäß 6 insbesondere im Fußbereich desselben bevorzugt formschlüssig aufnehmbar und halterbar.

Das Gargefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des Rührwerkantriebs sowie einer weiter bevorzugt behälterbodenseitig vorgesehenen Aufheizvorrichtung 8 und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Aufheizvorrichtung 8 durch einen Verschlussdeckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

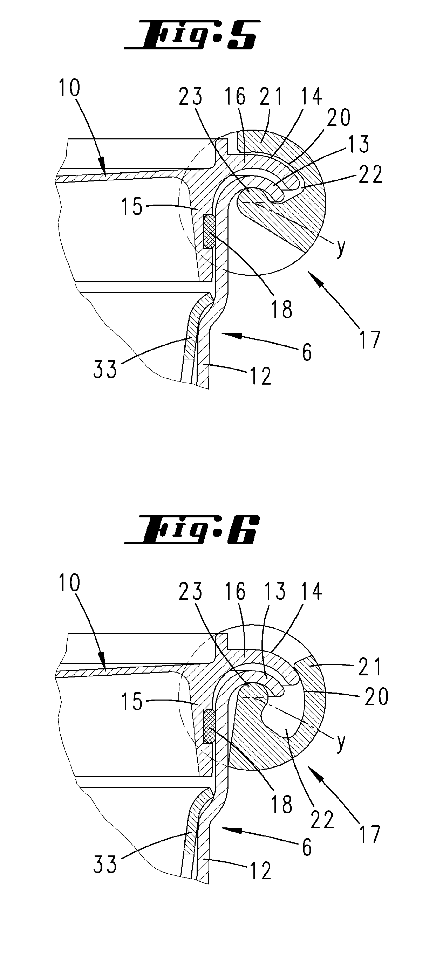

Das Gargefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzterer ist mit Bezug auf einen Vertikalquerschnitt (vgl. Fig. 5) kreislinienabschnittförmig gebildet, weiter bevorzugt halbkreislinienförmig, mit einer nach vertikal oben gerichteten Wölbungsfläche 14.

Der Deckel 10 ist unterseitig, d. h. in Zuordnungsstellung dem Gefäßinneren zugewandt, mit einem sich im Wesentlichen koaxial zur Vertikalachse x erstreckenden umlaufenden Kragen 15 versehen. Fußseitig des Kragens 15, entsprechend entlang der in Zuordnungsstellung dem Gefäßinneren zugewandten Kragenrandkante, ist ein nach radial außen sich erstreckender Deckelrand 15 angeformt. Dieser erstreckt sich mit Bezug auf einen Vertikalschnitt gemäß Fig. 5 angepasst an den Gefäßrand 13 kreislinienabschnittförmig, weiter bevorzugt in Zuordnungszustellung des Deckels 10 unter konzentrischem Verlauf zu dem Gefäßrand 13. In der Zuordnungsstellung stützt sich der Deckel 10 über dessen Deckelrand 16 auf dem Gefäßrand 13 ab (vgl. Fig. 5).

An dem Deckel 10 ist im Bereich des Kragens, zugewandt der Gefäßwandung 12, eine Dichtung 18 vorgesehen, insbesondere zur fluiddichten Anordnung des Deckels 10 auf dem Gefäß 6. In üblicher Weise besteht eine solche Dichtung aus einem Weichkunststoffmaterial, beispielsweise aus einem thermoplastischen Elastomer.

Insbesondere im Betrieb der Küchenmaschine, weiter insbesondere im Rührwerk- und/ oder Heizbetrieb ist der auf das Gefäß 6 aufgesetzte Deckel 10 zu verriegeln, da im Betrieb der Küchenmaschine 1 gegebenenfalls hohe Kräfte beispielsweise durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt. Letztere erstreckt sich weiter parallel zu einer durch den Deckelrand 16 bzw. durch den Gefäßrand 13 aufgespannten Ebene.

Weiter ist die Anordnung der Drehachse y so gewählt, dass diese sich radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt gemäß Fig. 5 den Mittelpunkt des kreislinienabschnittförmigen Gefäßrandes 13 schneidet.

Das insgesamt langgesteckt zylinderförmige Verriegelungsteil 17 ist zufolge der vorbeschriebenen Anordnung und Ausrichtung der Drehachse y derart angeordnet, dass dieses mit Bezug auf eine Draufsicht den Gargefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Ein Ende des Verriegelungsteiles 17 ist über einen Wellenstumpf mit einem in der Küchenmaschine 1 angeordneten Elektromotor 19 verbunden.

Über den Wellenstumpf ist das Verriegelungsteil 17 an der Küchenmaschine 1 um die Achse y drehbar festgelegt, dies weiter bei insgesamt frei auskragender Anordnung desselben.

Das insgesamt wellenartige Verriegelungsteil 17 ist weiter mit einer sich in dem dargestellten Ausführungsbeispiel etwa über 60 bis 70 % der axialen Länge des Verriegelungsteiles 17 erstreckenden Höhlung 20 versehen. Diese ist so gestaltet, dass sich jeweils zugeordnet den in axialer Richtung betrachteten Endbereich in der Höhlung 20 mit Bezug auf einen Vertikalschnitt, d. h. mit Bezug auf einen senkrecht zur Drehachse y betrachteten Schnitt, ein kreisbogenartiger Übergreifabschnitt 21 einstellt. Dieser erstreckt sich konzentrisch zur Drehachse y, wobei der von dem Übergreifabschnitt 21 überdeckte Höhlungsabschnitt 22 hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende

Übergreifabschnitt 21 erstreckt sich kreisbogenartig, in dem dargestellten Ausführungsbeispiel über einen Bereich von etwa 80 bis 85°.

Weiter in Erstreckungsrichtung der Drehachse y betrachtet ist mittig zwischen den Übergreifabschnitte 21 ein Auflagebereich 23 ausgebildet. Dieser ist bevorzug kugelkopfartig oder ballenartig ausgeformt, insbesondere mit Bezug auf einen Vertikalschnitt gemäß Fig. 5 mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/oder des Deckelrandes 16 in einem Vertikalschnitt.

In dem Auflagebereich 23 ist die Höhlung 20 so gebildet, dass in einer Deckelfreigabestellung gemäß Fig. 6 sich oberhalb des Auflagebereiches 23 ein freies vertikales Anheben bzw. Absenken des Gefäßes 6 sowie des Deckels 10 erreichbar ist. Zufolge der insgesamt kreisscheibenförmigen Ausgestaltung des Deckels 10 ist dieser ungerichtet dem Gefäßrand zuordbar.

Die Drehachse y des Verriegelungsteils 17 erstreckt sich durch das Zentrum des Auflagebereiches 23, um so bei einer Rotation des Verriegelungsteiles 17 die Gefäßposition konstant zu halten.

In der Zuordnungsstellung (vgl. Fig. 5) lagert auf der ballig bis kugelig ausgeführten Fläche des Auflagebereiches 23 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

Zum Betrieb der Küchenmaschine 1 wird der Deckel 10 aufgelegt, dies unter unmittelbarer Abstützung des Deckelrandes 16 auf dem Gefäßrand 13.

Zufolge Rotation des Verriegelungsteiles (über Elektromotor 19, gegebenenfalls manuell) werden die in Axialrichtung zueinander distanzierten Übergreifabschnitte 21 über den Deckelrand 16 verlagert bis hin in eine Endstellung, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die erwähnte Radialdichtung sichergestellt.

Weiter bevorzugt sind zwei Verriegelungsteile 17 vorgesehen, die mit Bezug auf eine Draufsicht gegenüberliegend angeordnet sind, dies bei paralleler Ausrichtung der Drehachsen y zueinander. Zufolge dieser Anordnung ist bedingt durch die jeweils zwei ausgebildeten Übergreifabschnitte 21 je Verriegelungsteil 17 eine insgesamt Vier-Punkt-Verriegelung des Deckels 10 erreicht. Hieraus ergibt sich, dass sich das Gargefäß 6 über den Gargefäßrand 13 zunächst auf zwei um 180° gegenüberliegenden Auflagenbereichen 23 abstützt, so dass mit Bezug auf eine Draufsicht die die Verriegelungsbereiche miteinander verbindenden Linien sich im Bereich der Vertikalachse x des Gefäßes 6 schneiden, wobei weiter der Schnittpunkt der Verbindungslinien senkrecht oberhalb des Gefäßschwerpunktes liegt. Hierdurch wird erreicht, dass das Gefäß 6 kein abstützendes Kippmoment aufbaut, welches an anderer Stelle abgestützt werden müsste.

Insbesondere zufolge der in Erstreckungsrichtung der Drehachse y zueinander beabstandet ausgebildeten Übergreifabschnitte 21 bzw. Verriegelungsbereiche ist erreicht, dass der Kraftfluss von den Auflagebereichen 23 der Verriegelungsteile 17 unter den Gefäßrand 13 durch das jeweilige Verriegelungsteil 17 zu den Übergreifabschnitten 21 und darüber auf den Deckel 10 aufgebracht werden. Hierdurch werden in dem dargestellten Ausführungsbeispiel vier Andruckstellen auf dem Umfang des Deckels 10 gebildet.

Über das Bedienfeld 2 ist mittels eines oder mehrerer der Regler bzw. Taster 3 neben der Rührwerksdrehzahl auch die bevorzugt im Bereich des Gargefäßbodens vorgesehene Aufheizvorrichtung 8 einstellbar. Hierzu ist diese zunächst als elektrische Widerstandsheizung ausgebildet. Diese verfügt bevorzugt über einen oder zwei konzentrische Heizabschnitte, wobei weiter diese, wie auch der Gefäßboden, eine zentrale Öffnung zum Durchtritt des Rührwerks 7 belässt.

In dem Gargefäßboden 24, weiter in unmittelbarer Zuordnung zu der unter dem Gargefäßboden 24 angeordneten Widerstandsheizung, ist ein Heizflächen-Temperaturfühler 25 vorgesehen. Dieser überwacht die Temperatur der Heizleiterbahnen, aus welcher Temperatur die korrespondierende Temperatur an der Bodenoberfläche 26 über den Zusammenhang der Wärmeleitung berechnet werden kann. Die Messwerte werden über eine nicht dargestellte Leitung an eine küchenmaschinenseitige Regeleinheit übertragen.

Mit vertikalem Abstand von wenigen Millimetern, bevorzugt etwa 5 mm, oberhalb der Bodenoberfläche 26, ist ein Medien-Temperaturfühler 27 wandungsinnenseitig des Gargefäßes 6 vorgesehen. Auch dessen Messinformationen werden über eine weitere Leitung an die Regeleinheit übertragen.

Sowohl der Heizflächen-Temperaturfühler 25 als auch der Medien-Temperaturfühler 27 sind in dem dargestellten Ausführungsbeispiel bevorzugt lokal begrenzte Temperatursensoren mit PTC- oder NTC-Verhalten.

Alternativ zu der vorgeschlagenen Ausgestaltung des Heizflächen-Temperaturfühlers 25 kann die Temperatur an der Bodenoberfläche 26 auch aus dem Ableitstrom eines Dielektrikums ermittelt werden, welches bspw. zwischen dem, dem aufzuheizenden Medium zugewandten Heizboden und den Heizleiterbahnen der Aufheizvorrichtung 8 angeordnet ist.

Die Messleitungen der beiden Temperaturfühler 25 und 27 des aus der Küchenmaschine 1 entnehmbaren Gargefäßes 6 sind, wie auch die Leitungen zur Spannungsversorgung, über in der Gefäßaufnahme 5 vorgesehene, nicht dargestellte Steckkontakte elektrisch kontaktierbar.

Die Lage des Medien-Temperaturfühlers 27 ist oberhalb der Grenzschicht kritischer Medien und außerhalb des direkten Einflusses der Widerstandsheizung der Aufheizvorrichtung 8 gewählt. Dieser Medien-Temperaturfühler 27 dient dem Ist-Vergleich der zu erzielenden Medien-Temperatur und besitzt eine hinreichende Messgenauigkeit.

Der Gargefäß 6 ist zusammen mit dem Verschlussdeckel 10 zunächst in üblicher Weise zum Garen von Gargütern G unter Atmosphärendruck nutzbar. Hierbei kann die Einfüllöffnung 11 des Verschlussdeckels 10 auch während des Garprozesses offen bleiben. Der Garprozess unterliegt bspw. einer küchenmaschinenseitigen Rezeptsteuerung, über welche die Regelung der Aufheizvorrichtung 8 und/oder des Rührwerkes 7 über bevorzugt vorgegebene Zeitspannen erfolgt.

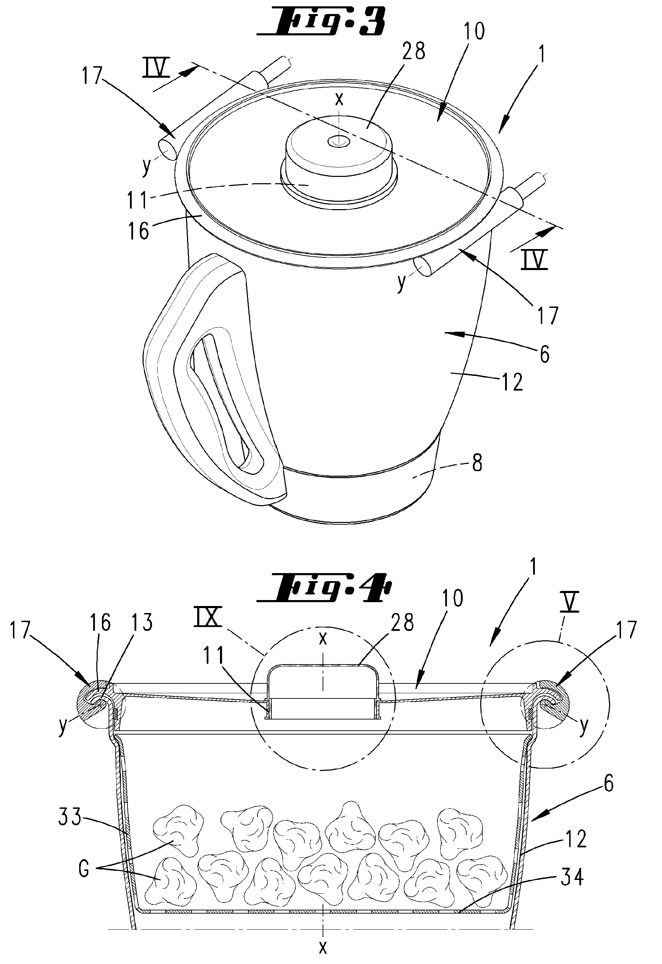

Auch kann die Einfüllöffnung 11 des Verschlussdeckels 10 bei einem Garprozess unter atmosphärischem Druck verschlossen werden. Hierzu dient eine stopfenartige Verschlusskappe 28, welche bevorzugt Entlüftungsöffnungen belassend in die Einfüllöffnung 11 eingesetzt wird, dies weiter bevorzugt unter Abstützung auf der nach oben gewandten Fläche des Verschlussdeckels 10 (vgl. Fig. 4).

Das Gargut G kann in dem Gargefäß 6 auf dem Gargefäßboden abgelegt sein. Bevorzugt wird diesbezüglich die Anordnung eines Gareinsatzes 33, welches bevorzugt insgesamt, weiter insbesondere im Bereich des Gareinsatzbodens 34 Durchtrittsöffnungen aufweist. Ein solcher Gareinsatz 33 stützt sich unterhalb des Kragens 15 des Verschlussdeckels 10 an der zugewandten Gefäßwandung 12 ab, ist entsprechend weiter bevorzugt freihängend in dem Gargefäß 6 angeordnet. Auf dem Gareinsatzboden 34 wird das zu garende Gargut G aufgelegt, ist entsprechend zu dem Gefäßboden beabstandet.

Zum Garen wird in das Gargefäß 6 eine Flüssigkeit F (bspw. Wasser oder Sud) eingefüllt, weiter bevorzugt so viel, dass sich das Gargut G bei nicht betätigtem Rührwerk 7 oberhalb des Flüssigkeitsspiegels befindet, womit ein Überdruck-Dampfgaren ermöglicht ist.

Auch können sowohl auf dem Gargefäßboden als auch auf dem Gareinsatzboden 34 unterschiedliche Gargüter G aufgelegt werden, um diese gleichzeitig zu garen.

Insbesondere die vorgesehene Verriegelung des Verschlussdeckels 10 an dem Gargefäß 6 bietet die Möglichkeit eines Überdruck-Garprozesses, wie dies bspw. bei üblichen Dampf- oder Schnellkochtöpfen bekannt ist. Hierzu ist neben der üblichen druckdichten Ausgestaltung des Gargefäßes 6 auch eine druckdichte Ausgestaltung des Verschlussdeckels 10 nötig. In diesem Zusammenhang ist zunächst die Materialwahl des Verschlussdeckels 10 ausschlaggebend. Bevorzugt wird diesbezüglich die Ausgestaltung des Verschlussdeckels 10 aus einem Metallwerkstoff, bspw. Edelstahl. Alternativ besteht der Verschlussdeckel 10 aus einem druckfesten Hartkunststoffmaterial, welches auch unter üblichem Überdruck in dem Gargefäß 6 nicht elastisch nachgibt.

Bevorzugt wird weiter derselbe Verschlussdeckel 10 wie zum Garen unter Atmosphärendruck für eine Zubereitung unter Überdruck genutzt. Hierzu wird die Einfüllöffnung 11 druckdicht verschlossen mittels eines stopfenartigen Verschlussteils 29.

Das Verschlussteil 29 ist bevorzugt mittels eines Schraubgewindes und einer Überwurfmutter umlaufend an dem Rand der Einfüllöffnung 11 festlegbar, dies weiter bevorzugt unter Einschluss einer umlaufenden, axial wirkenden Dichtung 30.

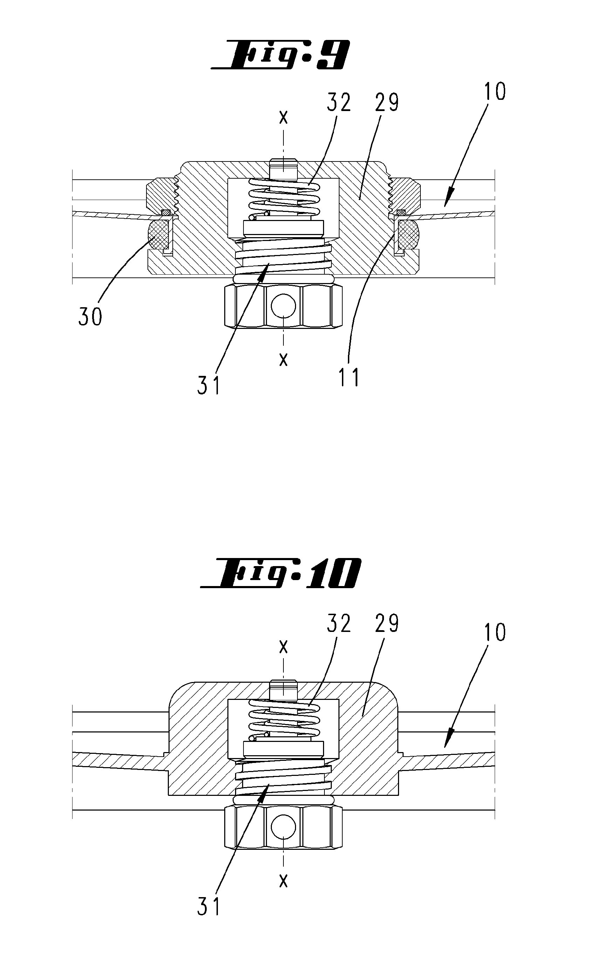

In dem Verschlussteil 29 ist weiter bevorzugt ein Überdruckventil 31 angeordnet, welches aus einer ventilverschlossenen Grundstellung heraus bei Übersteigen eines vorgegebenen Druckwertes innerhalb des Gargefäßes 6 selbsttätig öffnet und so einen Weg zur unter Atmosphärendruck stehenden Umgebung freigibt. Das Überdruckventil 31 ist über eine Druckfeder 32 in die geschlossene Grundposition belastet (vgl. Fig. 9).

Weiter alternativ wird zur Nutzung des Gargefäßes 6 für einen Überdruck-Garprozess ein gesondert hierzu ausgebildeter Verschlussdeckel 10 eingesetzt, welcher bevorzugt zentral, die Vertikalachse x aufnehmend, ein bevorzugt nicht entfernbares Überdruckventil 31 aufweist (vgl. Fig. 10).

Mittels der Möglichkeit eines Überdruck-Garens in der Küchenmaschine 1 ist eine Reduzierung der Garzeit und entsprechend des Energieeintrages auf ein Minimum ermöglicht. Bevorzugt wird mittels eines geführten Programmablaufs ein geregelter Garvorgang im Überdruckmodus ermöglicht, wobei mittels direkter Temperaturabfrage über den Heizflächen-Temperaturfühler 25 und/oder Medien-Temperaturfühler 27 eine selbsttätige Regelung der Aufheizvorrichtung 8 durchgeführt werden kann, dies bevorzugt dahingehend, dass ein in dem Gargefäß 6 vorgegebener Überdruck möglichst gleichmäßig gehalten wird, weiter bevorzugt einem Ansteigen des Überdruckes über einen Maximalwert, der ein Auslösen des Überdruckventils 31 zur Folge hätte, unterbunden wird. Über die ermittelte Temperatur ist auf den Druck innerhalb des Gargefäßes 6 zu schließen. Alternativ kann hierzu auch eine unmittelbare Druckabfrage, bspw. unter Nutzung eines in dem Gargefäß 6 wandungsseitig oder deckelseitig vorgesehenen Drucksensors erfolgen.

Mittels der Temperatur- und oder Druckabfrage wird zudem auch das Verriegelungssystem für den Verschlussdeckel 10 gesteuert. Eine Freigabe, d.h. eine Verlagerung des oder der Verriegelungsteile 17 in eine Deckelfreigabestellung ist bevorzugt erst nach einem Druckabbau innerhalb des Gargefäßes 6 möglich, weiter bevorzugt nach einem Druckabbau bis auf ein Atmosphärendruck-Niveau. Zum schnelleren Temperatur-Abbau zum Ende des gesamten Garprozesses wird in bevorzugter Ausgestaltung das Rührwerk 7 genutzt, welches zumindest zu diesem Zwecke aktiviert wird.

Wie weiter bevorzugt, sind die sich in einer Ausgestaltung selbsttätig einstellenden Parameter, wie bspw. Temperatur und/oder Rührwerk-Drehzahl, weiter bevorzugt das voraussichtliche Ende des gesamten Garprozesses auf dem Display 4 angezeigt. Zu dem Gesamt-Garprozess gehört bevorzugt auch die Zeitspanne, die zum Druckabbau innerhalb des Gargefäßes 6 benötigt wird. Entsprechend ist nach einem bevorzugt auf dem Display 4 angezeigten Ende des Gesamt-Garprozesses unmittelbar der Zugriff auf das in dem Gargefäß 6 befindliche Gargut G nach entsprechender Abnahme des Verschlussdeckels 10 möglich. Eine gesonderte Entlüftung, bspw. über das Überdruckventil 31, ist bevorzugt nicht nötig, insbesondere nicht dann, wenn der Gesamt-Garprozess abgeschlossen ist.

Zufolge der vorgeschlagenen Lösung ist eine Integration einer Schnellkochtopffunktion in eine bspw. als Kochmixer ausgebildete Küchenmaschine ermöglicht, wobei die in der Küchenmaschine vorgesehenen Riegelelemente in vorteilhafter Weise auch zur Nutzung der Schnellkochtopffunktion dienen.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Küchenmaschine
- 2: Bedienfeld
- 3: Regler/Taster
- 4: Display
- 5: Gefäßaufnahme
- 6: Gargefäß
- 7: Rührwerk
- 8: Aufheizvorrichtung
- 9: Netzanschlusskabel
- 10: Verschlussdeckel
- 11: Einfüllöffnung
- 12: Gefäßwandung
- 13: Gefäßrand
- 14: Wölbungsfläche
- 15: Kragen
- 16: Deckelrand
- 17: Verriegelungsteil
- 18: Dichtung
- 19: Elektromotor
- 20: Höhlung
- 21: Übergreifabschnitt
- 22: Höhlungsabschnitt
- 23: Auflagebereich
- 24: Gargefäßboden
- 25: Heizflächen-Temperaturfühler
- 26: Bodenoberfläche
- 27: Medien-Temperaturfühler
- 28: Verschlusskappe
- 29: Verschlussteil
- 30: Dichtung
- 31: Überdruckventil
- 32: Druckfeder
- 33: Gareinsatz
- 34: Gareinsatzboden

- F: Flüssigkeit
- G: Gargut

- x: Vertikalachse
- y: Drehachse

## Patentansprüche

1. Verfahren zum Zubereiten von Speisen in einem Gargefäß (6) mit einem Aufnahmevolumen von 0,5 bis 5 Liter, wobei das Gargefäß (6) einen Verschlussdeckel (10) aufweist und der Verschlussdeckel (10) zur Erzeugung eines Überdrucks im Zuge der Zubereitung im Inneren des Gargefäßes (6) druckdicht verschließbar ist, **dadurch gekennzeichnet, dass** das Gargefäß (6) Teil einer Küchenmaschine (1) ist und mittels einer in ihrer Leistung regelbaren Aufheizvorrichtung (8) aufgeheizt wird und dass eine Aufheizung in Abhängigkeit eines gewünschten Druckes in dem Gargefäß (6) vorgenommen wird.

2. Verfahren nach Anspruch 1 oder insbesondere danach, **dadurch gekennzeichnet, dass** der Druck durch eine dem Gefäßinneren zugeordnete Temperatur überwacht wird.

3. Verfahren nach einem oder mehreren der vorhergehenden Ansprüche oder insbesondere danach, **dadurch gekennzeichnet, dass** das Gargefäß (6) ein Rührwerk (7) aufweist und/oder, bevorzugt, dass das Rührwerk (7) im Zuge eines Garvorganges zum Rühren des Gargutes (G) und/oder im Hinblick auf einen schnelleren Temperatur-Abbau eingesetzt wird.

4. Verfahren nach einem oder mehreren der vorhergehenden Ansprüche oder insbesondere danach, **dadurch gekennzeichnet, dass** das Gargut (G) in einem Gareinsatz (33) oberhalb des Rührwerkes (7) aufgenommen ist.

5. Verfahren nach einem oder mehreren der vorhergehenden Ansprüche oder insbesondere danach, **dadurch gekennzeichnet, dass** eine Flüssigkeitsbefüllung des Gargefäßes (6) so weit vorgenommen wird, dass das Gargut (G) bei nicht betätigtem Rührwerk (7) sich oberhalb des Flüssigkeitsspiegels befindet.

6. Verfahren nach einem oder mehreren der vorhergehenden Ansprüche oder insbesondere danach, **dadurch gekennzeichnet, dass** eine Deckelverriegelung vorgenommen wird und dass eine Entriegelung nur in Abhängigkeit von einem vorgegebenen Druck und/oder einer vorgegebenen Temperatur in dem Gargefäß (6) vorgenommen wird.

7. Elektrische Küchenmaschine (1) mit einem Gargefäß (6) und einem Verschlussdeckel (10) für das Gargefäß (6), weiter mit einer Aufheizvorrichtung (8) für das Gargefäß (6), **dadurch gekennzeichnet, dass** der Verschlussdeckel (10) druckdicht mit dem Gargefäß (6) verschließbar ist, womit ein Garvorgang unter Überdruck durchführbar ist, und dass mittels Erfassung einer dem Inneren des Gargefäßes (6) zugeordneten Temperatur und/oder dem Inneren des Gargefäßes (6) zugeordneten Druckes ein Garvorgang durchführbar ist, der einen gesteuerten Druckabbau ermöglicht.

8. Küchenmaschine nach Anspruch 7 oder insbesondere danach, **dadurch gekennzeichnet, dass** ein Druckfühler vorgesehen ist, der den Druck im Inneren des Gargefäßes (6) misst.

9. Küchenmaschine nach einem der Ansprüche 7 bis 8 oder insbesondere danach, **dadurch gekennzeichnet, dass** in der Gefäßwandung (12) oder dem Verschlussdeckel (10) ein Überdruckventil (31) vorgesehen ist.

10. Küchenmaschine nach einem oder mehreren der Ansprüche 7 bis 9 oder insbesondere danach, **dadurch gekennzeichnet, dass** der Verschlussdeckel (10) eine vorzugsweise zentrale Öffnung (11) aufweist und dass in die Öffnung (11) zur Ausbildung eines druckdichten Verschlussdeckels (10) ein Verschlussteil (29) einsetzbar ist und/oder, bevorzugt, dass das Verschlussteil (29) ein Überdruckventil (31) ist.
